Europäisches Patentamt

(19) European Patent Office

Office européen des brevets

(11) Numéro de publication: **0 243 222 B1**

(12) **FASCICULE DE BREVET EUROPEEN**

(45) Date de publication du fascicule du brevet:
**13.03.91 Bulletin 91/11**

(21) Numéro de dépôt: **87400640.6**

(22) Date de dépôt: **23.03.87**

(51) Int. Cl.⁵: **H02G 15/013,** H02G 15/113,
H02G 15/192

(54) **Dispositif de protection d'épissure de câbles.**

(30) Priorité: **24.03.86 FR 8604167**

(43) Date de publication de la demande:
**28.10.87 Bulletin 87/44**

(45) Mention de la délivrance du brevet:
**13.03.91 Bulletin 91/11**

(84) Etats contractants désignés:
**DE ES GB IT**

(56) Documents cités:
**EP-A- 0 023 099**
**DE-A- 3 043 824**
**FR-A- 1 401 957**
**FR-A- 2 194 062**
**US-A- 3 337 681**
**US-A- 3 692 926**

(73) Titulaire: **Kerboul, Michel**
**47, Résidence du Roux**
**F-22300 Lannion (FR)**
Titulaire: **Petit, Régis**
**Saint Meen-Saint Quay Perros**
**F-22700 Perros Guirec (FR)**

(72) Inventeur: **Kerboul, Michel**
**47, Résidence du Roux**
**F-22300 Lannion (FR)**
Inventeur: **Petit, Régis**
**Saint Meen-Saint Quay Perros**
**F-22700 Perros Guirec (FR)**

(74) Mandataire: **Martinet & Lapoux**
**62, rue des Mathurins**
**F-75008 Paris (FR)**

## Description

La présente invention concerne un dispositif pour protéger une épissure de câbles comprenant une enveloppe externe et deux boîtiers de moulage, tel que défini dans le préambule de la revendication 1.

Un tel dispositif de protection est décrit dans la demande de brevet européen EP-A-0 023 099. Bien que comprenant des blocs de produit injectable, tel que résine, adhérant intimement sur les extrémités de câble, un tel dispositif présente avantageusement un démontage aisé et rapide pour accéder à l'épissure sans aucune détérioration ou destruction de blocs moulés de produit injectable renfermés dans les cavités des boîtiers. L'aisance du démontage résulte du fait que les extrémités de l'enveloppe sont liées à des surfaces périphériques externes des boîtiers de moulage par deux minces joints circulaires plats, tels que joints toriques ou rondelles en caoutchouc ou en mastic, qu'il suffit de remplacer après intervention sur l'épissure et avant nouvelle fermeture du dispositif.

Dans ce dispositif, les bords de bridage des deux demi-boîtiers constituant un boîtier de moulage sont accotés directement l'un sur l'autre. Comme la majeure partie des boîtiers contenant les cavités de moulage du produit injectable, tel que résine durcissable, est située à l'extérieur de l'enveloppe externe, une discontinuité d'étanchéité radiale et longitudinale aux câbles existe entre les extrémités internes de l'enveloppe assujetties aux boîtiers et les cavités de moulage.

Toutefois, par le brevet US-A-3 337 681 est connu un dispositif d'épissure de câbles comprenant à chaque extrémité, des demi-boîtiers tubulaires ayant des bords accotés l'un contre l'autre par l'intermédiaire d'un produit d'étanchéité, tel que mastic ou bande plastique. Le US-A-3 337 681 ne prévoit pas cependant de produit injectable dans les demi-boîtiers, et par conséquent, l'étanchéité est encore défectueuse aux extrémités du dispositif.

La présente invention vise à parfaire l'étanchéité dans un tel dispositif de protection d'épissure de câbles, et plus particulièrement l'étanchéité transversale et longitudinale aux extrémités du dispositif.

A cette fin, un dispositif pour protéger une épissure de câbles est tel que défini dans la revendication 1.

Selon une autre caractéristique de l'invention applicable particulièrement lorsque les boîtiers de moulage sont complétement entourés par l'enveloppe externe, chaque boîtier comporte un canal d'injection et un canal d'évent entre des orifices respectifs débouchant latéralement au dispositif vers l'extérieur et la cavité interne au boîtier. Le remplissage de cavités annulaires autour des extrémités de câble peut être ainsi réalisé après le montage complet du dispositif de protection, y compris celui de l'enveloppe externe ; le temps de prise intérieur du produit injectable, tel que résine, n'affecte pas ainsi la durée du montage du dispositif relativement courte.

D'autres avantages et caractéristiques de l'invention apparaîtront plus clairement à la lecture de la description suivante de plusieurs réalisations préférées de l'invention en référence aux dessins annexés correspondants, dans lesquels :

– la Fig. 1 est une vue en coupe longitudinale axiale d'un dispositif de protection d'une épissure de deux câbles selon l'invention ;

– la Fig. 2 est une vue en coupe transversale prise le long de la ligne II-II de la Fig.1 ;

– les Figs. 3, 3A et 3B sont respectivement des vues transversales et en coupe prises le long des lignes A-A et B-B de la Fig. 3 d'une première variante de moule à l'extrémité d'un câble ;

– les Figs. 4, 5, 5A et 5B sont respectivement des vues transversales, côté enveloppe externe et côté extérieur, et des vues en coupe prises le long des lignes A-A et B-B des Figs.5B et 5, d'une seconde variante de moule formant embout à l'extrémité de l'enveloppe externe ; et

– la Fig. 6 est une vue en perspective schématique d'un dispositif de protection de plusieurs épissures de câble selon l'invention.

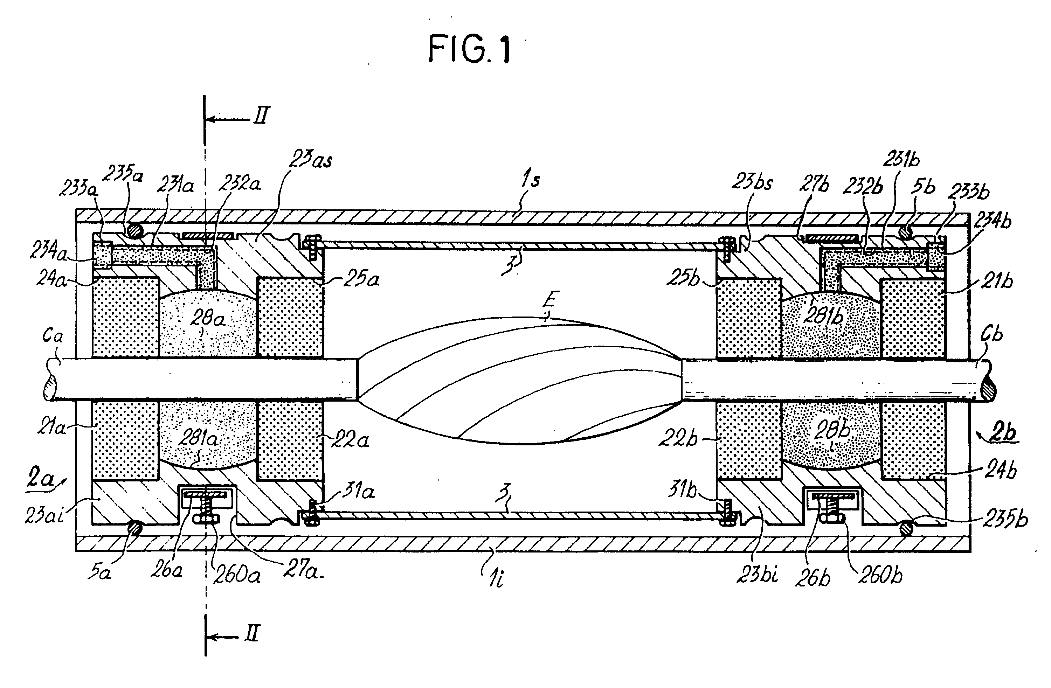

Comme montré à la Fig. 1, un dispositif de protection pour protéger une épissure E des extrémités de deux câbles de conducteurs électriques Ca et Cb comprend principalement une enveloppe extérieure 1s-1i, et assujettis aux extrémités des câbles de part et d'autre de l'épissure E dans l'enveloppe extérieure, deux moules 2a et 2b reliés par des entretoises longitudinales 3. Le dispositif ainsi que les pièces le composant ont des formes générales cylindriques axées sur les câbles selon la réalisation illustrée, ou des sections transversales polygonales, par exemple rectangulaires ou carrées.

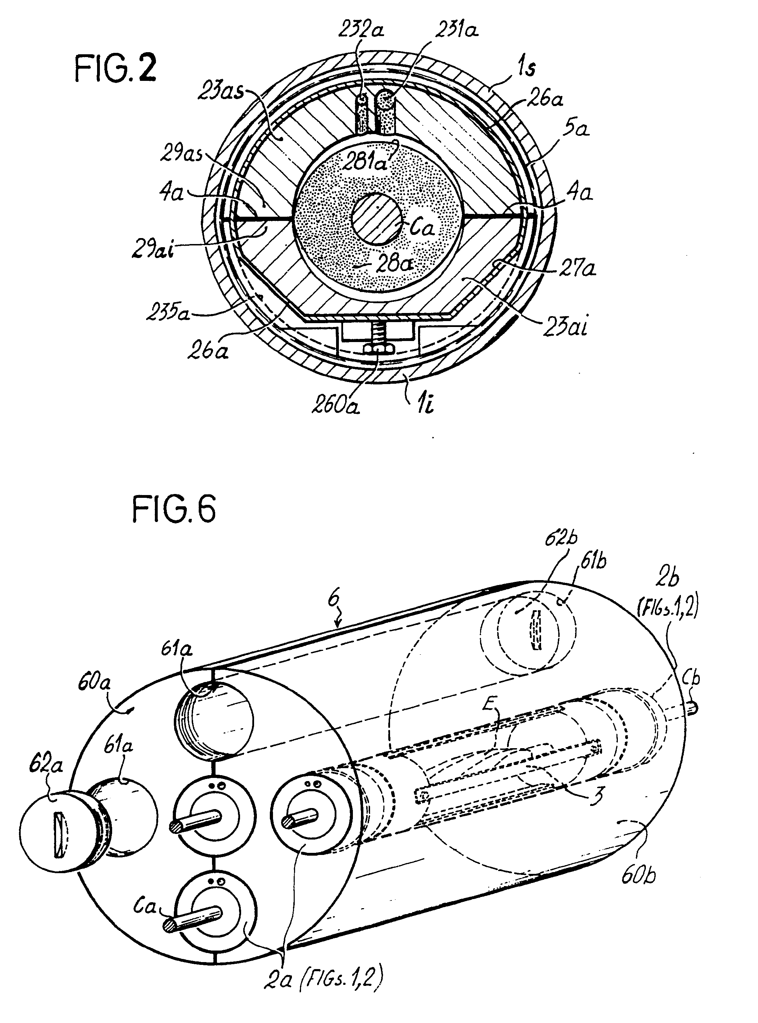

Les moules 2a et 2b étant identiques, l'un d'eux, 2a, destiné à étancher l'extrémité du câble Ca est décrit en détail ci-après en référence aux Figs. 1 et 2. L'autre moule 2b comporte des pièces identiques à celles du moule 2a, indiquées par des repères correspondants accompagnés de l'indice b dans la Fig. 1.

Le moule 2a est constitué par deux parois latérales 21a et 22a et un boîtier 23as-23ai. Les parois latérales 21a et 22a sont deux bagues espacées axées le long de l'extrémité gainée du câble Ca. Les bagues sont en mousse de polyéthylène ou de polyuréthane, et peuvent être monoblocs et enfilées autour du câble Ca avant formation de l'épissure, ou être fendues radialement, ou bien peuvent être composées de deux demi-bagues formant deux mâchoires. De préférence, le diamètre interne des bagues 21a et 22a est sensiblement inférieur au diamètre de gaine du câble Ca et le diamètre externe des bagues 21a et 22a est sensiblement supérieur au diamètre de lamages 24a et 25a pratiqués dans le boîtier 23as-23ai et recevant respectivement les bagues afin de compresser les bagues radialement autour du câble et obtenir une excellente étanchéité.

Le boîtier 23as-23ai est composé selon la réalisation illustrée, de deux demi-boîtiers hémicylindriques supérieur 23as et inférieur 23ai formant à leurs extrémités les lamages 24a et 25a coiffant les parois latérales de moule 21a et 22a, et les reliant mécaniquement. Les demi-boîtiers sont assujettis l'un à l'autre au moyen d'un collier de serrage 26a ayant des brins reliés par vis 260a et logé dans une gorge externe périphérique 27a au milieu du boîtier. Comme montré à la Fig. 2, tout le collier 26a et en particulier la vis 260a sont contenus dans la gorge 27a afin que la surface périphérique externe du boîtier 2a soit très proche de la surface interne de l'enveloppe 1s-1i.

Le moule 2a ainsi monté offre une cavité annulaire de moulage 28a entourant une portion du câble Ca entre les parois latérales 21a et 22a et entourée par un alésage à section axiale elliptique 281a pratiqué dans le boîtier 23as-23ai et situé entre les lamages 24a et 25a. L'un, 23as, des demi-boîtiers comporte un canal d'injection 231a et un canal d'évent 232a communiquant entre eux à travers la cavité 28a au niveau du demi-alésage ellipsoïde central supérieur du moule. Les canaux 231a et 232a sont coudés et ont leur majeure partie sensiblement parallèle à l'axe du câble Ca afin que les canaux 231a et 232a offrent un orifice d'entrée 233a et un orifice de sortie 234a débouchant latéralement sur une face transversale du moule 2a orientée vers l'extérieur, à l'opposé de l'épissure E. Comme on le verra dans la suite, la position des orifices 233a et 234a sur une face externe du dispositif de protection permet de couler de la résine dans la cavité 28a après montage du dispositif complet et notamment de l'enveloppe extérieure 1s-1i.

Comme cela apparaît dans la Fig. 2, des bords de jonction longitudinaux 29as et 29ai des demi-boîtiers 23as et 23ai sont accotés l'un sur l'autre suivant un plan diamétral par l'intermédiaire d'un produit d'étanchéité compressible 4a, tel que deux bandes en mastic ou en élastomère, éventuellement à boudins longitudinaux. Le produit d'étanchéité 4a est déposé entre les bords 29as et 29ai de façon que le produit 4a déborde aussi bien vers l'intérieur du moule 2a, dans la cavité 28a, que vers l'extérieur du moule 2a, entre celui-ci et l'intérieur de l'enveloppe 1s-1i. Les débordements de produit intérieurs au moule permettant de lier intimement le produit 4a avec de la résine coulée dans la cavité 28a, et les débordements de produit extérieurs au moule permettent de lier intimement la surface périphérique extérieure du moule 2a à la surface périphérique interne de l'enveloppe 1a-1i à travers un joint torique compressible 5a, ce qui parfait l'étanchéité longitudinale et radiale du dispositif de protection. Le joint 5a peut être en mastic ou en élastomère, est saillant d'une gorge externe 235a pratiquée à la périphérie du moule 2a, du côté de la paroi latérale externe 21a, et est en contact intime avec la surface cylindrique interne de l'enveloppe 1s-1i.

L'enveloppe 1s-1i est constituée par deux demi-enveloppes hémicylindriques 1s et 1i bridées l'une à l'autre classiquement à travers deux joints longitudinaux par boulons ou analogues, ou reliées l'une à l'autre sur un côté longitudinal par une charnière ou une barrette souple formant charnière, et sur l'autre côté longitudinal par languette et rainure complémentaires et/ou boulons ou analogues.

Comme montré à la Fig. 1, les extrémités longitudinales de l'enveloppe renferment respectivement les moules 2a et 2b par l'intermédiaire des joints toriques 5a et 5b, et la portion centrale de l'enveloppe entoure les entretoises 3. Les entretoises servent à positionner les moules 2a et 2b dans l'enveloppe et à rigidifier la liaison mécanique entre les moules et donc la liaison entre les extrémités des câbles au niveau de l'épissure. Les entretoises 3 sont constituées soit par des barres longitudinales, soit par des demi-coquilles hémicylindriques, et ont des extrémités fixées par vis radiales 31a et 31b sur les périphéries externes des moules 2a et 2b entourant les parois latérales intérieures 22a et 22b en vis-à-vis et de part et d'autre de l'épissure E.

Pour réaliser une protection de l'épissure E, on procède d'abord au montage des deux moules de coulée 2a et 2b autour des extrémités des câbles respectifs Ca et Cb. Les deux moules sont assujettis mécaniquement l'un à l'autre au moyen des entretoises 3 fixées par les vis 31a et 31b aux moules. Les joints toriques 5a et 5b sont déposés dans les gorges externes 235a et 235b sur la périphérie externe des moules 2a et 2b. Les moules et les entretoises sont recouverts par l'enveloppe extérieure 1s-1i. Ensuite, un produit injectable, tel que de la résine polymérisable durcissable, est injecté dans les cavités 28a et 28b des moules à travers les canaux d'injection 231a et 231b, au moyen d'une seringue, d'un sachet ou d'un tube muni d'un embout introduit dans les orifices d'entrée 233a et 233b. Le remplissage de chacune des cavités 28a et 28b par la résine est arrêté lorsque la résine ressort par le canal d'évent respectif 232a 232b débouchant latéralement à travers l'orifice de sortie 234a, 234b. Après polymérisation, la résine adhère autour des tronçons du câble Ca, Cb entre les parois latérales 21a et 22a, 21b et 22b du moule, et en particulier, est liée intimement aux débords du produit d'étanchéité, tel que 4a, à l'intérieur de la cavité 28a, 28b.

Pour accéder de nouveau à l'épissure E, il suffit d'ouvrir l'enveloppe externe 1s-1i pour la séparer en les demi-enveloppes 1s et 1i, et de désaccoupler les moules 2a et 2b en démontant les entretoises 3, les moules 2a et 2b n'étant pas démontés et étant conservés en leur état sans aucune intervention sur la résine dans les cavités 28a et 28b et demeurant autour des extrémités des câbles. Ensuite, le dispositif de protection est refermé en fixant les entretoises 3 aux moules 2a et 2b, en "rafraîchissant" les produits d'étanchéité 5a et 5b, par exemple par ajout de minces rubans de mastic au niveau des gorges 235a et 235b, et en installant l'enveloppe extérieure 1i-1s autour des moules et des entretoises, ou le cas échéant, une nouvelle enveloppe extérieure analogue à la précédente.

Deux variantes de la réalisation d'un moule 2a, 2b sont décrites ci-après, en utilisant les mêmes repères.

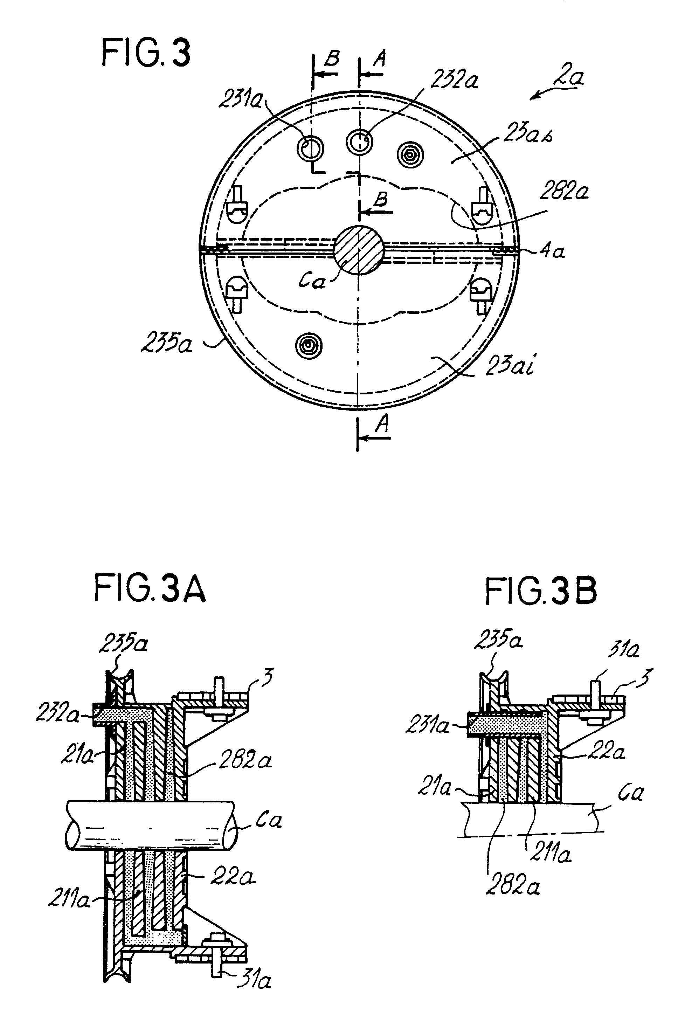

Selon une première variante montrée aux Figs. 3, 3A et 3B, un dispositif de protection comprend deux moules 2a et 2b à l'intérieur des extrémités d'une enveloppe cylindrique externe 1s-1i et entourant des extrémités de câble Ca et Cb. Chaque moule 2a, 2b est obtenu par l'assemblage de demi-boîtier hémicylindriques 23as et 23ai assujettis l'un à l'autre. Cet assemblage est également effectué par interposition d'un produit d'étanchéité 4a, 4b débordant vers l'intérieur et l'extérieur du boîtier 2a, 2b. Cependant, chaque demi-boîtier 23as, 23ai comporte des demi-parois rigidies 21a et 22a découpées aux dimensions de l'extrémité du câble, et non plus des parois rapportées en mousse. Entre les parois sont prévues des cloisons transversales 211a percées d'orifices afin de former des interstices 282a transversaux communiquant entre eux, à remplir de résine. Un canal d'injection 231a et un canal d'évent 232a sont pratiqués entre la paroi extérieure latérale 21a et au moins l'interstice 282a le plus éloigné de celle-ci, et entre la paroi 21a et l'interstice 282a le plus proche de celle-ci. Selon cette première variante, les interstices 282a à remplir de résine ont une section transversale sensiblement oblongue.

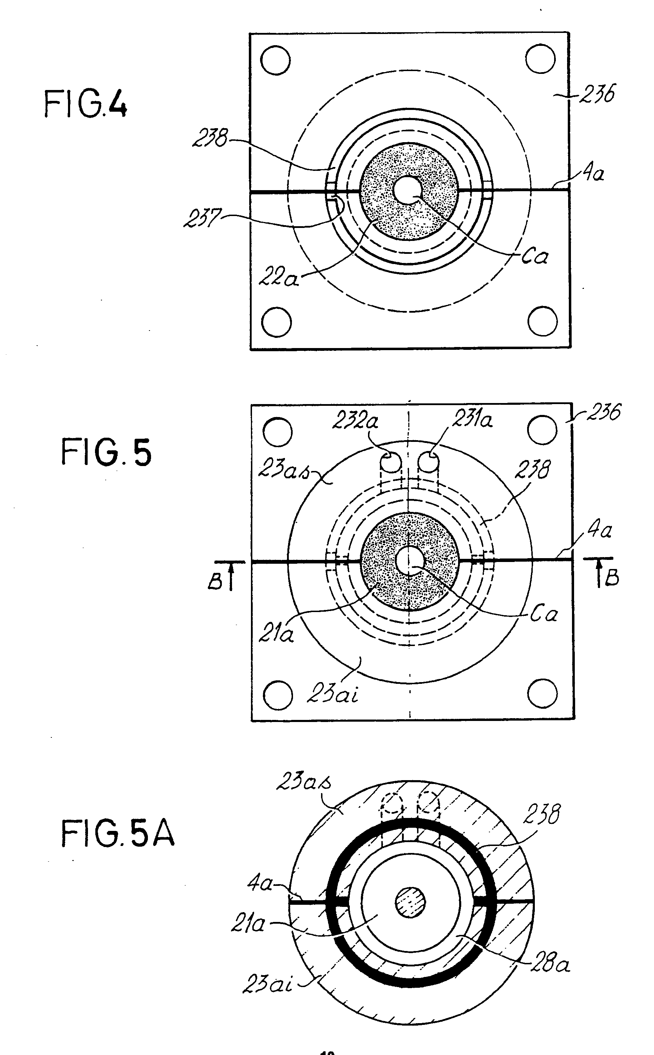

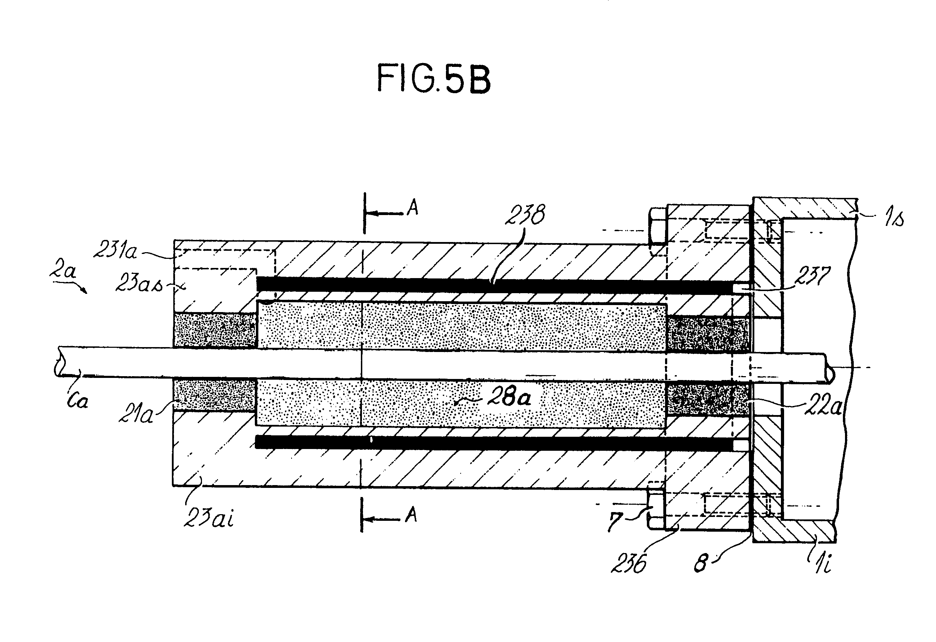

Selon une seconde variante montrée aux Figs. 4, 5, 5A et 5B, le dispositif de protection comprend deux moules cylindriques 2a, 2b situés à l'extérieur d'une enveloppe externe 1s-1i, de préférence à section carrée, contenant l'épissure. Chaque moule forme un embout ayant une embase à section carrée 236 fixée par vis 7 contre une face circulaire respective de l'enveloppe par l'intermédiaire d'un joint sous forme de rondelle mince 8 ou d'un joint torique en matière déformable logé dans deux gorges 237. Selon cette variante, l'enveloppe externe joue un rôle analogue aux entretoises 3 montrées à la Fig. 1. Selon cette seconde variante, chaque moule, tel que celui 2a illustré, est composé de deux demi-boîtiers hémicylindriques 23as et 23ai accotés par deux bandes de joint 4a et entourant à leurs extrémités deux parois latérales sous forme de bagues en mousse 21a et 22a entourant le câble Ca. Les gorges 237 sont pratiquées longitudinalement dans un plan diamétral d'accotement des demi-boîtiers et communiquent avec la cavité de moulage 28a. Ces gorges communiquent avec une cavité annulaire longitudinale borgne 238 pratiquée concentriquement à la cavité cylindrique 28a dans les demi-boîtiers et débouchant dans la face de l'embase 236. Le joint 4a peut être avantageusement constitué par un jonc de mastic logé dans la cavité longitudinale 238 ; par compression, le jonc de mastic flue notamment vers l'intérieur de la cavité 28a et les gorges 237. Un canal d'injection 231a et un canal d'évent 232a longitudinaux et coudés sont également prévus dans le demi-boîtier 23as entre la face extérieure latérale du moule à l'opposé de l'enveloppe externe et la cavité cylindrique de moulage 28a à remplir de résine qui vient adhérer sur le joint 4a.

Ainsi aussi bien selon la réalisation montrée dans les Figs. 1 et 2 que selon les deux variantes précédentes, le démontage de l'enveloppe externe est effectuée pour inspecter et réparer l'épissure sans affecter par un quelconque démontage, les moules contenant la résine injectée.

Selon une autre variante montrée à la Fig. 6, le dispositif de protection est destiné à protéger plusieurs épissures de câbles, par exemple au nombre de cinq. Dans ce cas, à chaque épissure est associé deux moules 2a et 2b reliés par des entretoises 3, et une enveloppe 6 formée par deux demi-enveloppes offre des parois latérales externes 60a, 60b percée de trous circulaires 61a, 61b deux à deux alignés longitudinalement. Les trous 61a, 61b ont un diamètre sensiblement supérieur au diamètre externe des moules 2a et 2b, afin de réaliser plusieurs montages et assemblages de moules comme montré par exemple aux Figs. 1 et 2. Par exemple, on réalise d'abord une protection d'une épissure de deux câbles, et on bouche les trous restants 61a et 61b par des obturateurs étanches appropriés 62a, 62b, tels que bouchons filetés par exemple. En fonction des besoins, la capacité d'épissurage du dispositif peut être augmentée en réouvrant l'enveloppe 6, en inserrant un ensemble de deux moules et entretoises dans deux orifices alignés 61a et 61b à la place des deux obturateurs correspondants et en refermant l'enveloppe.

Selon une autre variante, des dispositifs de protection d'épissure avec enveloppes externes 1s-1i, tels que celui montré aux Figs. 1 et 2, sont enfermés dans l'enveloppe commune 6 ; dans les paires de trous de l'enveloppe 6 sont fixées les enveloppes 1s-1i des dispositifs de protection.

Enfin, il est à noter que l'invention est utilisable aussi bien pour protéger des épissures de câbles électriques, par exemple des câbles téléphoniques, que des épissures de câbles à fibres optiques.

## Revendications

1. Dispositif pour protéger une épissure (E) de câbles (Ca ; Cb) comprenant

    – une enveloppe externe (1s-1i), et deux boîtiers de moulage (2a, 2b) axés respectivement autour des câbles par l'intermédiaire de paires de parois espacées, et assujettis à l'enveloppe (1s, 1i) par l'intermédiaire de joints (5a ; 5b ; 8),

– chaque boîtier (2a ; 2b) étant partagé longitudinalement aux câbles (Ca, Cb) en deux demi-boîtiers (23as, 23bi ; 23as, 23bi) réunis par des moyens de serrage (26a ; 26b) ; et contenant une paire de parois (21a, 22a ; 21b, 22b) espacées et coaxiales aux câbles (Ca, Cb) et formant avec celles-ci une cavité (28a ; 28b) remplissable par un produit injectable autour du câble respectif (Ca ; Cb),

– les demi-boîtiers (23as, 23bi) de chaque boîtier (2a ; 2b) ayant des bords de jonction longitudinaux (29as, 29ai) accotés l'un à l'autre, caractérisé par un produit d'étanchéité (4a), tel que mastic ou élastomère, qui est placé entre les bords accotés (29as, 29ai) des demi-boîtiers et qui déborde à l'intérieur de la cavité (28a) du boîtier (2a) pour être lié intimement avec le produit injectable, et/ou à l'extérieur du boîtier, entre celui-ci et l'enveloppe (1s-1i), pour être lié intimement avec le joint correspondant (5a ; 8).

2. Dispositif conforme à la revendication 1, caractérisé en ce que chaque boîtier (2a ; 2b) comporte un canal d'injection (231a ; 231b) et un canal d'évent (232a ; 232b) entre des orifices respectifs (233a, 234a ; 233b, 234b) débouchant latéralement au dispositif vers l'extérieur et la cavité (28a ; 28b) interne au boîtier.

3. Dispositif conforme à la revendication 2, caractérisé en ce que les canaux (231a, 232a ; 231b, 232b) sont en majeur partie sensiblement parallèles aux câbles (Ca, Cb).

4. Dispositif conforme à l'une quelconque des revendications 1 à 3, caractérisé en ce que les moyens de serrage sont un collier de serrage (26a ; 26b) entourant le boîtier (2a ; 2b), de préférence logé entièrement dans une gorge périphérique externe (27a, 27b) du boîtier.

5. Dispositif conforme à l'une quelconque des revendications 1 à 4, caractérisé en ce que le joint (5a ; 5b) entre chaque boîtier (2a ; 2b) et l'enveloppe externe (1s, 1i) est un joint de préférence en mastic ou élastomère.

6. Dispositif conforme à l'une quelconque des revendications 1 à 5, caractérisé en ce que les boîtiers de moulage (2a, 2b) sont contenus dans des extrémités de l'enveloppe externe (1s-1i).

7. Dispositif conforme à l'une quelconque des revendications 1 à 5 caractérisé en ce que les boîtiers de moulage (2a, 2b) sont à l'extérieur de l'enveloppe externe (1s-1i) et fixés à des faces latérales de celles-ci par l'intermédiaire des joints (8).

8. Dispositif de protection de plusieurs épissures de câbles conforme à l'une quelconque des revendications 1 à 7 caractérisé en ce que l'enveloppe externe (6) comprend deux parois latérales (60a, 60b) percées de trous (61a, 61b), chaque paire de trous dans les parois de l'enveloppe étant propre à recevoir deux boîtiers de moulage de deux câbles épissurés ou deux obturateurs étanches (62a, 62b).

9. Dispositif de protection de plusieurs épissures de câbles, caractérisé en ce qu'il comprend une enveloppe externe commune (6) ayant deux parois latérales (60a, 60b) percées de trous (61a, 61b), chaque paire de trous dans les parois de l'enveloppe externe commune (6) étant traversée par un dispositif de protection d'épissure de câble conforme à l'une quelconque des revendications 1 à 7, ou par deux obturateurs étanches (62a, 62b).

## Ansprüche

1. Schutzvorrichtung für eine Spleißstelle (E) von Kabeln (Ca ; Cb), aufweisend

– eine Außenhülle (1s-1i) und zwei Formgehäuse (2a, 2b), die jeweils mittels Paaren von mit Abstand angeordneten Wänden um Kabel ausgerichtet angeordnet sind und mittels Dichtungen (5a, 5b ; 8) an der Hülle (1s, 1i) befestigt sind,

– wobei jedes Gehäuse (2a, 2b) in Längsrichtung zu den Kabeln (Ca, Cb) in zwei Halbgehäuse (23as, 23bi ; 23as, 23bi) aufgeteilt ist, die durch Klemmittel (26a, 26b) verbunden sind und ein Paar von Wänden (21a, 22a ; 21b, 22b) enthalten, die mit Abstand angeordnet und zu den Kabeln (Ca, Cb) koaxial sind und mit diesen einen Hohlraum (28a, 28b) bilden, der durch ein spritzfähiges Produkt um das jeweilige Kabel (Ca ; Cb) ausfüllbar ist,

– wobei die Halbgehäuse (23as, 23bi) jedes Gehäuses (2a ; 2b) aufeinander abgestützte Verbindungslängskanten (29as, 29ai) aufweisen, **gekennzeichnet** durch

– ein Dichtmittel (4a) wie Mastix oder Elastomer, das zwischen den abgestützten Kanten (29as, 29ai) der Halbgehäuse angeordnet ist und das im Inneren des Hohlraums (28a) des Gehäuses (2a), um innig mit dem spritzfähigen Produkt verbunden zu werden, und/oder außerhalb des Gehäuses zwischen diesem und der Hülle (1s-1i) vorsteht, um innig mit der entsprechenden Dichtung (5a ; 8) verbunden zu werden.

2. Vorrichtung nach Anspruch 1, dadurch **gekennzeichnet**, daß jedes Gehäuse (2a ; 2b) einen Einspritzkanal (231a ; 231b) und einen Entlüftungskanal (232a ; 232b) zwischen entsprechenden Öffnungen (233a, 234a ; 233b, 234b), die seitlich zur Vorrichtung nach außen münden, und dem inneren Hohlraum (28a ; 28b) zum Gehäuse umfaßt.

3. Vorrichtung nach Anspruch 2, dadurch **gekennzeichnet**, daß die Kanäle (231a, 232a ; 231b, 232b) größtenteils im wesentlichen parallel zu den Kabeln (Ca, Cb) sind.

4. Vorrichtung nach einem beliebigen der Ansprüche 1 bis 3, dadurch **gekennzeichnet**, daß die Klemmittel eine das Gehäuse (2a ; 2b) umgebende Klemmbefestigung (26a, 26b) sind, die vorzugsweise völlig in einer peripheren Außennut (27a, 27b) des Gehäuses untergebracht ist.

5. Vorrichtung nach einem beliebigen der Ansprüche 1 bis 4, dadurch **gekennzeichnet**, daß die Dichtung (5a ; 5b) zwischen jedem Gehäuse (2a ; 2b) und der Außenhülle (1s, 1i) eine Dichtung vorzugsweise aus Mastix oder Elastomer ist.

6. Vorrichtung nach einem beliebigen der Ansprüche 1 bis 5, dadurch **gekennzeichnet**, daß die Formgehäuse (2a, 2b) in Enden der Außenhülle (1s-1i) enthalten sind.

7. Vorrichtung nach einem beliebigen der Ansprüche 1 bis 5, dadurch **gekennzeichnet**, daß die Formgehäuse (2a, 2b) außerhalb der Außenhülle (1s-1i) und an deren Seitenflächen mittels Dichtungen (8) befestigt sind.

8. Schutzvorrichtung für mehrere Kabelspleißstellen nach einem beliebigen der Ansprüche 1 bis 7, dadurch **gekennzeichnet**, daß die Außenhülle (6) zwei von Löchern (61a, 61b) durchbohrte Seitenwände (60a, 60b) aufweist, wobei jedes Lochpaar in den Wänden der Hülle in der Lage ist, zwei Formgehäuse von zwei gespleißten Kabeln oder zwei dichte Verschlüsse (62a, 62b) aufzunehmen.

9. Schutzvorrichtung für mehrere Kabelspleißstellen, dadurch **gekennzeichnet**, daß sie eine gemeinsame Außenhülle (6) mit zwei Seitenwänden (60a, 60b) aufweist, die von Löchern (61a, 61b) durchbohrt sind, wobei jedes Lochpaar in den Wänden der gemeinsamen Außenhülle (6) von einer Schutzvorrichtung für Kabelspleißstellen nach einem beliebigen der Ansprüche 1 bis 7 oder von zwei dichten Verschlüssen (62a, 62b) durchquert ist.

## Claims

1. Device for protecting a splice (E) in cables (Ca, Cb) comprising :
   – an outer sheath (1s-1i) and two moulded housings (2a, 2b) respectively mounted coaxially around the cables through the intermediary of pairs of spaced out walls, and secured to the sheath (1s, 1i) through the intermediary of seals (5a ; 5b ; 8),
   – each housing (2a ; 2b) being divided longitudinally at the cables (Ca, Cb) into two half-housings (23as, 23bi ; 23as, 23bi) joined by means for gripping them (26a ; 26b), and containing a pair of walls (21a, 22a ; 22a, 22b) spaced out and mounted coaxially with the cables (Ca, Cb) and forming with the said cables a cavity (28a ; 28b) which can be filled with a product capable of being injected around the respective cable (Ca ; Cb),
   – the half-housings (23as, 23bi) of each housing (2a ; 2b) having longitudinal joining edges (29as, 29ai) resting against each other, characterized by a sealant (4a) such as mastic or an elastomer which is placed between the adjacent edges (29as, 29ai) of the half-housings, and which extends into the inside of the cavity (28a) of the housing (2a) so that it is joined intimately to the product capable of being injected and/or which extends on the outside of the housing between the said housing and the sheath (1s, 1i) so that it is intimately connected with the corresponding seal (5a ; 8).

2. Device according to Claim 1, characterized in that each housing (2a ; 2b) comprises an injection channel (231a ; 231b) and a vent channel (232a ; 232b) between respective apertures (233a, 234a ; 233b, 234b) running laterally in the device towards the outside and the cavity (28a ; 28b) inside the housing.

3. Device according to Claim 2, characterized in that the channels (231a, 232a ; 231b, 232b) are, for the most part, substantially parallel to the cables (Ca, Cb).

4. Device according to any one of Claims 1 to 3, characterized in that the means for gripping comprises a clamping collar (26a ; 26b) surrounding the housing (2a ; 2b), preferably mounted entirely in an outer peripheral recess (27a, 27b) of the housing.

5. Device according to any one of Claims 1 to 4, characterized in that the seal (5a ; 5b) between each housing (2a ; 2b) and the outer sheath (1s, 1i) is a seal preferably made of mastic or an elastomer.

6. Device according to any one of Claims 1 to 5, characterized in that the moulded housings (2a, 2b) are contained in the ends of the outer sheath (1s-1i).

7. Device according to any one of Claims 1 to 5, characterized in that the moulded housings (2a, 2b) are outside the outer sheath (1s-1i) and are fixed to the lateral faces of the latter through the intermediary of seals (8).

8. Device for protecting several splices in cables according to any one of Claims 1 to 7, characterized in that the outer sheath (6) comprises two lateral walls (60a, 60b) penetrated by holes (61a, 61b), each pair of holes in the walls of the sheath being suitable for receiving two moulded housings of two spliced cables or two leakproof obturators (62a, 62b).

9. Device for protecting several splices in cables, characterized in that it comprises a common outer sheath (6) having two lateral walls (60a, 60b) penetrated by holes (61a, 61b), each pair of hoies in the walls of the common outer sheath (6) being traversed by a device for protecting a cable splice according to any one of Claims 1 to 7, or by two leakproof obturators (62a, 62b).

# FIG.1

EP 0 243 222 B1

FIG.2

FIG.6

# FIG. 3

# FIG. 3A

# FIG. 3B

FIG.4

238

237

22a

236

4a

Ca

FIG.5

232a    231a    236

23as    238

B    B

4a

21a    Ca

23ai

FIG.5A

23as    238

4a

21a    28a

23ai

10

FIG.5B